# EUROPÄISCHE PATENTSCHRIFT

(11) **EP 0 983 811 B1**
(45) Veröffentlichungstag und Bekanntmachung des Hinweises auf die Patenterteilung: **08.05.2002**
(21) Anmeldenummer: 99117148.9
(22) Anmeldetag: 31.08.1999
(51) Int. Cl.: B22D 11/06, F16L 27/04

(54) **Drehdurchführung mit Kugelkopf**
Rotatable connection with ball head
Jonction rotative avec rotule

(30) Priorität: 02.09.1998 DE 19840043
(43) Veröffentlichungstag der Anmeldung: 08.03.2000
(73) Patentinhaber: Georg Springmann Industrie- und Bergbautechnik GmbH, 45472 Mühlheim an der Ruhr (DE)
(72) Erfinder: Springmann, Georg, 45472 Mülheim an der Ruhr (DE); Warmbier, Dieter, 47441 Moers (DE); Hasselbrink, Dirk, 47059 Duisburg (DE)
(74) Vertreter: Viering, Jentschura & Partner

(56) Entgegenhaltungen:
- EP-A- 0 213 384
- EP-A- 0 647 811
- WO-A-97/17152
- DE-A- 19 605 797
- DE-C- 4 207 042
- DE-C- 19 541 131
- DE-C- 19 613 032
- GB-A- 2 046 386

## Beschreibung

Die vorliegende Erfindung betrifft eine Drehdurchführung mit den Merkmalen des Oberbegriffs des Anspruches 1.

Drehdurchführungen werden in unterschiedlichen Industriezweigen, insbesondere für Stranggußanlagen in der Stahlindustrie benötigt. Bei diesen Stranggußanlagen läuft der rotglühende Stahl in Strangform über Walzen, die außen in Lagern in Lagerböcken drehbar gelagert sind. Diese Walzen werden in einem geschlossenen Kreislauf durch die Zuführung von Wasser unter Druck in das Innere der Walzen zur Abführung der Wärme gekühlt. Mit der Drehdurchführung wird der Übergang von dem sogenannten Rotor und der daran angeflanschten Kühlwasserleitung zu dem an der Walze befestigten und sich damit mitdrehenden Gehäuse abgedichtet.

Im Stand der Technik sind hauptsächlich zwei verschiedene Arten von Drehdurchführungen bekannt. Eine erste Ausführungsform der Drehdurchführungen weist eine außerhalb des Walzeninneren liegende Baueinheit auf, die die Bauelemente für die notwendige Wasserzufuhr, Lagerung und Dichtung enthält. Bauartbedingt weisen derartige Anlagen mit solchen Drehdurchführungen eine erhebliche Breite rechts und links der Lagerböcke auf.

Zur Verminderung der Anlagenbreite sind daher seitens der Anlagenbauer Forderungen aufgestellt worden, Lagerung und dichtendes System in das Innere der Walze zur verlegen.

Zur Aufnahme der Drehdurchführung in der Walze ist eine Bohrung vorgesehen, in die die Drehdurchführung eingesteckt wird und dann beispielsweise über eine Verschraubung mit der Walze ortsfest verbunden wird. Das zur Kühlung verwendete Wasser wird unter einem Überdruck von bis zu 15 Atmosphären in die Drehdurchführung geleitet, und der auf die Bauelemente einwirkende Wasserdruck stellt zusammen mit der Bewegung derselben und der thermischen Beanspruchung erhebliche Anforderungen an die Abdichtungstechnik.

Eine verwendete Technik zur Abdichtung der sich bei Drehung der Walze in einer relativen Drehbewegung zueinander bewegenden Bauelemente der Drehdurchführung basiert auf der Verwendung einer Radialdichtung bestehend aus kreisförmigen 0-Ringen oder Lippendichtungen aus Elastomer als dem maßgeblichen Dichtungselement.

Andere Techniken sind in der EP-A1-392.838 beschrieben. In dieser Druckschrift ist eine Drehdurchführung mit einer Dichtungsanordnung beschrieben, die durch den hydraulischen Druck der Flüssigkeit betätigt wird. Es handelt sich jedoch dabei um eine konstruktiv aufwendige Anordnung.

Den im Stand der Technik bekannten Drehdurchführungen ist gemeinsam, dass besonders bei radialen Belastungen der Walze infolge der relativ starren Wasserzu- und -abführungen Scherkräfte auf die Drehdurchführung wirken und einen starken Verschleiß der Drehdurchführung verursachen. Hinzu kommt die zumeist aufwendige mechanische Konstruktion der im Stand der Technik bekannten Drehdurchführungen.

Eine andere Ausführung einer Dreheinführung wurde in der DE-PS-42 07 042 beschrieben. Diese Lösung hat sich jedoch aufgrund des hohen Verschleißes der verwendeten Dichtung in der Praxis nicht bewährt.

Die Ausführungen der DE-196 13 032 und DE-195 41 131 sind technisch kompliziert, nur für spezielle Anwendungszwecke verwendbar und zudem wartungsaufwendig.

Die Dreheinführung gemäß der DE-196 05 797 der gleichen Anmelderin wie hier hat sich bereits in der Praxis bewährt, bedarf jedoch hinsichtlich der Verbesserung der Standzeiten noch Verbesserungen.

Es ist daher eine Aufgabe der vorliegenden Erfindung, eine verschleißfeste Drehdurchführung bereitzustellen, die einen zuverlässigen Betrieb bei verlängerten Standzeiten ermöglicht, einen einfachen Aufbau besitzt und bei den im Einsatz befindlichen Stranggießanlagen ohne Umrüstung der Anlage selbst als Austauschbauteil verwendbar ist.

Die Aufgabe der Erfindung wird gelöst durch Bereitstellung einer Drehdurchführung zum Anschluss einer Kühlmittelzuführung einer Walze, insbesondere für Stranggießanlagen, die über Zapfen in Lagerböcken in Wälzlagern gelagert ist und die über axiale Bohrungen durch die Zapfen mit dem Kühlmittel versorgt wird, mit einer Kühlmittelzuführung und mit einem zwischen Kühlmittelzuführung und Walze angeordneten Rotor mit einer den Rotor axial durchdringenden Bohrung, wobei an dem einen Ende des Rotors eine erste Dichtungsanordnung vorgesehen ist und am anderen Ende des Rotors der Rotorschaft nach Art eines Kugelkopfes ausgebildet ist, der mit einem Dichtungspartner eine zweite Dichtungsanordnung ausbildet.

Die erfindungsgemäße Drehdurchführung besitzt die Vorteile, dass sie einfach aufgebaut ist, eine erhöhte Verschleißfestigkeit und eine verringerte Störanfälligkeit besitzt und somit verlängerte Standzeiten ermöglicht. Die verwendeten Bauteile lassen sich bei Verschleiß einfach auswechseln.

Als ein wesentliches Element der vorliegenden Erfindung ist die Ausgestaltung des Rotorschaftes an dem der ersten Dichtungsanordnung gegenüberliegenden Ende des Rotors nach Art eines Kugelkopfes anzusehen. Der Kugelkopf ist im Außendurchmesser dem Innendurchmesser einer den Kugelkopf umfassenden zylindrischen Bohrung, die in der Kühlmittelzuführung oder der Walze vorgesehen ist, angepasst und kann so bereits ohne Verwendung von weiteren Dichtmitteln gegenüber der Bohrung abdichten.

Durch die erfindungsgemäße Ausgestaltung des Rotorschaftes mit einem Kugelkopf ist eine Beweglichkeit des Rotorschaftes in axialer und radialer Richtung gewährleistet und so können Kippmomente infolge Belastung der Walze bei der Brammenführung über die Walze oder infolge thermischer Belastung abgefangen werden, was zu geringerem Verschleiß und längeren Standzeiten der Drehdurchführung führt.

In einer bevorzugten Ausführungsform ist der Kugelkopf mit einer umfangsmäßige verlaufenden Nut versehen, in der eine Dichtung, vorzugsweise ein O-Ring, angeordnet ist und so eine verbesserte Dichtwirkung ergibt.

Bevorzugt ist der Kugelkopf vom Ende des Rotorschaftes beabstandet, und es ist eine Verdrehsicherung des Rotors am kugelkopfseitigen Ende des Rotorschaftes vorgesehen.

Der einstückig ausgebildete hohlzylindrische Rotor umfasst einen Rotorschaft und ist, gegebenenfalls in einer Axialbohrung eines Gehäuse, drehbar gelagert. Einenends ist an dem Rotor eine erste Dichtungsanordnung (Dichtungspaar) vorgesehen. Obgleich die Dichtungsanordnung auch durch aufeinander ablaufende Planflächen am Rotor und dem Drehpartner des Rotors, der beispielsweise als Teil eines Gehäuses der Drehdurchführung oder in der Kühlmittelzuführung ausgebildet werden kann, ist die Verwendung von zumindest einem in eine der Planflächen integrierten Gleitring als Dichtelement, der in der Regel aus Siliciumcarbid, Kohlegraphit oder ähnlichen Materialien besteht, bevorzugt. Einer dieser Gleitringe kann im ortsfesten Bauelement fest verankert oder federnd abgestützt sein, wobei auf dessen Planfläche die Gegenplanfläche eines anderen, gegebenenfalls federnd abgestützten Gleitringes als rotierender Gegenring ablaufen kann.

Die axiale Länge des Rotors ist so bemessen, dass an dem auf der dem Walzeninneren entgegengesetzten Gehäuseseite herausragenden Rotorschaftende die Kühlmittelzu- und/oder - abführung, gegebenenfalls über eine Verdrehsicherung gesichert, festgesetzt werden kann.

Als Materialien für das Gehäuse der Drehdurchführung, falls ein solches je nach Bauart verwendet wird, werden üblicherweise Messing, Lagerbronzen und Bleibronzen oder ähnliche Materialien verwendet. Der Rotor ist gewöhnlich aus einem korrosionsbeständigen Stahl gefertigt. Dabei kann es sich bevorzugt um Stähle der V2A- oder V4A-Sorten handeln.

In einer besonders bevorzugten Ausführungsform ist ein Teil des Rotorschaftes zwischen Kugelkopf und erster Dichtungsanordnung als elastischer Bereich ausgebildet. Der elastische Bereich des Rotorschaftes kann dabei mit Längenausgleichsmitteln versehen ist. Unter Bereich mit Längenausgleichsmitteln wird dabei erfindungsgemäß verstanden, dass der elastische Bereich in Form einer Teleskophülse, die vorzugsweise federnd ausgelegt sein kann, oder in Form einer Kompensators ausgestaltet werden kann.

Durch die Ausgestaltung des Rotorschaftes als elastische zylindrische Hülse können auf den Rotor einwirkende Kräfte abgefedert werden, und so kann die Standzeit der erfindungsgemäßen Drehdurchführung erhöht werden.

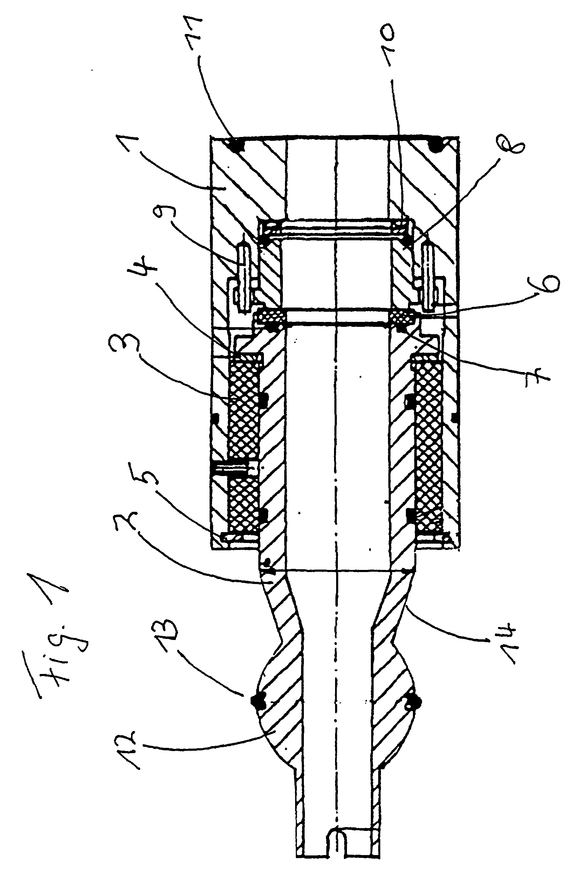

Ein Beispiel der Erfindung ist in der einzigen Fig. 1 dargestellt. Dabei zeigt Figur 1 eine schematische Querschnittsansicht einer Ausführungsform der erfindungsgemäßen Drehdurchführung.

In einem in die Walzenbohrung einsetzbaren Gehäuse (1) ist ein Rotor (2) über die Lagerbuchse (3) drehbar gelagert und liegt an der Lagerbuchse (3) über einen Rotorkragen und den Distanzring (4) an. Die Lagerbuchse (3) ist nach außen über den Seegerring (5) gesichert. An dem der Innenseite des Gehäuses zugewandten Ende des Rotors ist ein Gleitring (6) auf einem O-Ring (7) federnd abgestützt gelagert. Der Gleitring (6) läuft bei der in der Figur dargestellten Ausführungsform auf dem Druckteller (8) ab, der seinerseits einen in der Figur nicht dargestellten Gleitring tragen kann.

Der Druckteller (8) ist über Spannstifte 9 gegen ein Verdrehen gesichert. Der Druckteller (8) wird über die Wellfeder (10) gegen das Gehäuse (1) einerseits und gegen den Gleitring (6) am Rotor andererseits abgestützt unter Spannung gehalten.

Das Gehäuse 1 ist gegen die in der Zeichnung nicht dargestellte Walze über den O-Ring (11) abgedichtet. Der Rotor weist an dem aus dem Gehäuse überstehenden Endabschnitt eine kugelkopfartige Verdickung (12) auf, die in der Mitte eine Nut aufweist, in der ein O-Ring (13) gelagert ist. Über den O-Ring (13) erfolgt die Abdichtung gegen die zylindrische Bohrung der Kühlmittelzuoder -abführung, die in der Zeichnung nicht dargestellt ist.

Durch die kugelkopfartige Ausgestaltung des Rohrschaftes ist eine Beweglichkeit des Rotorschaftes in Richtung der Walzenachse oder in einem Winkel zur Walzenachse möglich, ohne dass es zu Undichtigkeiten am O-Ring (13) kommt.

Am außenseitigen Ende des Rotorschaftes können diametral angeordnete halbkreisförmige Ausschnitte in der Rotorschaftwand als Verdrehsicherung vorgesehen sein, die um einen in der zylindrischen Bohrung der nicht dargestellten Kühlmittelzuführung transversal verlaufenden Steg greifen und ein Verdrehen des Rotorschaftes verhindern.

Der in der Zeichnung konisch in Richtung auf den Kugelkopf zulaufende Rotorschaftabschnitt (14) kann vorzugsweise auch in Form einer abgedichteten, gefederten Teleskophülse oder eines Kompensators gestaltet sein und so eine größere Beweglichkeit des Rotorschaftes in den drei Raumachsen ermöglichen, falls es infolge der Belastung der Walze und des Walzenlagerspiels zu Relativbewegungen der Bauteile zueinander kommt.

Bei der erfindungsgemäßen Ausführungsform wird insbesondere ermöglicht, dass eine mit dem Lagerbock der Walze festverbundene Kühlmittelzuführung angebracht werden kann, ohne dass es infolge der Bewegung der Achse bei Belastung zu erhöhtem Verschleiß kommt und die Drehdurchführung undicht wird.

Der Anschluss von Schlauchleitungen an die der Kühlmittelzuführung kann in diesem Fall entfallen, da starre Leitungen verwendet werden können, die bei Reinigung der gesamten Anlage Schlauchleitungen aufgrund ihrer Starrheit vorzuziehen sind, da insbesondere die Reinigung der Anlage erleichtert wird.

Obgleich bei der in der Figur dargestellten Ausführungsform der Kugelkopf an dem außenseitigen Ende des Rotors (außerhalb der Walze) vorgesehen ist, ist es ebenso möglich, die erfindungsgemäße Drehdurchführung derart zu gestalten, dass der Rotor drehbar gelagert mit der Kühlmittelzuführung verbunden ist und zwischen Rotor und Kühlmittelzuführung, die beispielweise nach Art eines Deckels mit integrierten Kühlmittelkanal/-kanälen gestaltet werden kann, die (in der Zeichnung zwischen Gehäuse und Rotor) vorgesehene Dichtungsanordnung aus den Gleitringen zwischen Deckel (Kühlmittelzuführung) und Rotor angeordnet ist und der Kugelkopf in der zylindrischen Bohrung der Walze über einen O-Ring abdichtend angeordnet ist.

In jeder der beiden zuvor beschriebenen Ausführungsformen ist zwischen Walzen und Kühlmittelzuführung der Rotor angeordnet, wobei entweder zwischen Rotor und Kühlmittelzuführung eine Gleitringpaardichtungsanordnung und am im Inneren der Walze angeordneten Ende des Rotorschaftes ein Kugelkopf mit im Umfang umlaufender Nut und darin angeordneten O-Ring angeordnet ist, oder alternativ - wie in der Figur dargestellt - die Gleitringpaardichtungsanordnung ist zwischen Rotor und Gehäuse/Walze angeordnet und der Kugelkopf ist am außenseitigen Ende des Rotors zum Einschub und zur Abdichtung gegenüber der Kühlmittelzuführung vorgesehen.

Die Kühlmittelzuführung kann dabei, wie bereits oben erwähnt, in Form eines Deckels ausgeführt sein, in den die Kühlmittelzuführung/en integriert ist/sind und der den Lagerbock nach außen abdeckt.

## Patentansprüche

1. Drehdurchführung zum Anschluss einer Kühlmittelzuführung einer Walze, insbesondere für Stranggießanlagen, die über Zapfen in Lagerböcken in Wälzlagern gelagert ist und die über axiale Bohrungen durch die Zapfen mit dem Kühlmittel versorgt wird, mit einer Kühlmittelzuführung und mit einem zwischen Kühlmittelzuführung und Walze angeordneten Rotor (2) mit einer den Rotor (2) axial durchdringenden Bohrung, wobei an dem einen Ende des Rotors(2) eine erste Dichtungsanordnung (6;7;8) vorgesehen ist, **dadurch gekennzeichnet, dass** am anderen Ende des Rotors (2) der Rotorschaft nach Art eines Kugelkopfes (14) ausgebildet ist, der mit einem Dichtungspartner eine zweite Dichtungsanordnung ausbildet.

2. Drehdurchführung nach Anspruch 1, **dadurch gekennzeichnet, dass** der Kugelkopf (12) eine umfangsmäßige verlaufende Nut aufweist, in der eine Dichtung (13) angeordnet ist.

3. Drehdurchführung nach Anspruch 1 oder 2, **dadurch gekennzeichnet, dass** der Kugelkopf (12) vom Ende des Rotorschaftes beabstandet ist und eine Verdrehsicherung des Rotors am kugelkopfseitigen Ende des Rotorschaftes vorgesehen ist.

4. Drehdurchführung nach einem der vorhergehenden Ansprüche, **dadurch gekennzeichnet, dass** der Rotorschaft (14) zwischen Kugelkopf (12) und erster Dichtungsanordnung (6;7;8) einen elastischen Bereich aufweist.

5. Drehdurchführung nach Anspruch 4, **dadurch gekennzeichnet, dass** der elastische Bereich des Rotorschaftes (14) zwischen Kugelkopf und Dichtungsanordnung mit Längenausgleichsmitteln versehen ist.

6. Drehdurchführung nach einem der vorhergehenden Ansprüche, **dadurch gekennzeichnet, dass** die erste Dichtungsanordnung in Form eines Gleitringpaares (6;7;8) ausgebildet ist, wobei der eine Gleitring auf dem Rotor (2), gegebenenfalls federnd abgestützt, angeordnet ist und der zweite Gleitring am Drehpartner des Rotors, gegebenenfalls federnd abgestützt, angeordnet ist.

7. Drehdurchführung nach Anspruch 6, **dadurch gekennzeichnet, dass** der Drehpartner des Rotors (2) die Kühlmittelzuführung ist.

8. Drehdurchführung nach Anspruch 6, **dadurch gekennzeichnet, dass** der Drehpartner des Rotors (2) ein den Rotor (2) aufnehmendes Gehäuse (1) oder ein Teil davon ist.

9. Drehdurchführung nach Anspruch 8, wobei der Rotor (2) im Gehäuse (1) drehbar gelagert ist, der Gleitring (6) auf dem im Gehäuse (1) befindlichen Ende des einstückigen Rotors (2) festgelegt ist und sich mit dem Rotor mitdreht, der zweite Gleitring, der auf dem ersten Gleitring abläuft, von einem in das Gehäuse (1) an der dem Walzeninneren zugewandten Ende des Gehäuses (1) eingepassten Deckel getragen wird, und eine den Rotor (2) und den Deckel durchdringende axiale Bohrung vorgesehen ist, wobei der Rotorschaft an der, dem Walzeninneren abgewandten Seite des Gehäuses (1) einen aus dem Gehäuse überstehenden Endabschnitt mit einem Kugelkopf (12) aufweist, an den eine vorzugsweise zylindrische Bohrung der Kühlmittelzu-, bzw. abführung dichtend angepasst ist.

10. Drehdurchführung nach Anspruch 9, **dadurch gekennzeichnet, dass** zwischen Rotor (2) und Gehäuse (1) eine Lagerbuchse aus einem schmierfähigen Material (3) angeordnet ist.

## Claims

1. A rotatable lead-through for connection of a coolant feed to a roller, especially for continuous casting plants, which roller is mounted by way of journals in bearing blocks in rolling bearings and which is supplied with the coolant by way of axial bores through the journals, having a coolant feed and having arranged between coolant feed and roller a rotor (2) having a bore passing axially through the rotor (2), a first sealing arrangement (6; 7; 8) being provided at the one end of the rotor (2), **characterised in that** at the other end of the rotor (2) the rotor shaft is in the form of a spherical head (14) which, together with a sealing partner, forms a second sealing arrangement.

2. A rotatable lead-through according to Claim 1, **characterised in that** the spherical head (12) has a circumferential groove in which a seal (13) is arranged.

3. A rotatable lead-through according to Claim 1 or 2, **characterised in that** the spherical head (12) is spaced from the end of the rotor shaft and a means securing the rotor against rotation is provided at the spherical head end of the rotor shaft.

4. A rotatable lead-through according to any one of the preceding Claims, **characterised in that** between spherical head (12) and first sealing arrangement (6; 7; 8) the rotor shaft (14) has a resilient region.

5. A rotatable lead-through according to Claim 4, **characterised in that** the resilient region of the rotor shaft (14) between spherical head and sealing arrangement is provided with linear compensating means.

6. A rotatable lead-through according to any one of the preceding Claims, **characterised in that** the first sealing arrangement is in the form of a pair of sliding rings (6; 7; 8), one sliding ring being arranged, optionally resiliently supported, on the rotor (2), and the second sliding ring being arranged, optionally resiliently supported, on the rotary partner of the rotor.

7. A rotatable lead-through according to Claim 6, **characterised in that** the rotary partner of the rotor (2) is the coolant feed.

8. A rotatable lead-through according to Claim 6, **characterised in that** the rotary partner of the rotor (2) is a housing (1) or a part thereof receiving the rotor (2).

9. A rotatable lead-through according to Claim 4, wherein the rotor (2) is rotatably mounted in the housing (1), the sliding ring (6) is fixed on the end of the one-piece rotor (2) located in the housing (1) and turns with the rotor, the second sliding ring, which runs on the first sliding ring, is carried by a cover fitted into the housing (1) at the end of the housing (1) facing the roller interior, and an axial bore passing through the rotor (2) and the cover is provided, wherein the rotor shaft, on the side of the housing (1) remote from the roller interior, has an end portion projecting out of the housing and having a spherical head (12), to which a preferably cylindrical bore of the coolant feed or outlet line is adapted, forming a seal.

10. A rotatable lead-through according to Claim 9, **characterised in that** a bearing bush of material (3) capable of acting as a lubricant is arranged between rotor (2) and housing (1).

## Revendications

1. Passage tournant destiné au branchement d'une admission de liquide de refroidissement dans un cylindre, en particulier pour des installations de coulée continue, lequel est monté au moyen de pivots dans des paliers à roulement posés sur des supports de paliers et vers lequel est acheminé le liquide de refroidissement par l'intermédiaire de forures axiales réalisées dans les pivots, comprenant une admission de liquide de refroidissement et un rotor (2) monté entre l'admission du liquide de refroidissement et le cylindre, avec une forure passant à travers le rotor (2) dans le sens axial, sachant qu'il est prévu un premier système d'étanchéité (6 ; 7 ; 8) sur l'une des extrémités du rotor (2), **caractérisé en ce que**, sur l'autre extrémité du rotor (2), la tige du rotor est conçue à la manière d'une tête sphérique (14), qui constitue avec un partenaire d'étanchéité un deuxième système d'étanchéité.

2. Passage tournant selon la revendication 1, **caractérisé en ce que** la tête sphérique (12) comporte une rainure, qui est réalisée sur la périphérie et dans laquelle est disposé un joint d'étanchéité (13).

3. Passage tournant selon la revendication 1 ou 2, **caractérisé en ce que** la tête sphérique (12) est écartée de l'extrémité de la tige du rotor et une protection antitorsion du rotor est prévue sur l'extrémité de la tige du rotor du côté de la tête sphérique.

4. Passage tournant selon l'une des revendications précédentes, **caractérisé en ce que** la tige du rotor (14) est munie d'une zone élastique entre la tête sphérique (12) et le premier système d'étanchéité (6 ; 7 ; 8).

5. Passage tournant selon la revendication 4, **caractérisé en ce que** la zone élastique de la tige du rotor (14) est munie de moyens d'égalisation de la longueur, disposés entre la tête sphérique et le système d'étanchéité.

6. Passage tournant selon l'une des revendications précédentes, **caractérisé en ce que** le premier système d'étanchéité est conçu sous la forme d'une paire de bagues de glissement (6 ; 7 ; 8), dans laquelle l'une des bagues de glissement est disposée sur le rotor (2), le cas échéant en appui sur un ressort, et la deuxième bague de glissement est disposée sur le partenaire de rotation du rotor, le cas échéant en appui sur un ressort.

7. Passage tournant selon la revendication 6, **caractérisé en ce que** le partenaire de rotation du rotor (2) est l'admission du liquide de refroidissement.

8. Passage tournant selon la revendication 6, **caractérisé en ce que** le partenaire de rotation du rotor (2) est un carter (1), dans lequel est logé le rotor (2), ou une partie de celui-ci.

9. Passage tournant selon la revendication 8, dans lequel le rotor (2) est monté de manière à pouvoir tourner dans le carter (1), la bague de glissement (6) est fixée sur l'extrémité, située dans le carter (1), du rotor (2), réalisé en une seule pièce, et est entraînée en rotation par le rotor, la deuxième bague de glissement, qui se déplace sur la première bague de glissement, est posée sur un couvercle ajusté dans le carter (1) sur l'extrémité du carter (1) orientée vers l'intérieur du cylindre, et il est prévu une forure axiale passant à travers le rotor (2) et le couvercle, sachant que la tige du rotor, sur le côté du carter (1) détourné de l'intérieur du cylindre, comporte une zone d'extrémité en saillie hors du carter et munie d'une tête sphérique (12), sur laquelle une forure de préférence cylindrique est adaptée de manière étanche à l'admission et à l'évacuation du liquide de refroidissement.

10. Passage tournant selon la revendication 9, **caractérisé en ce qu'**un coussinet (3), réalisé dans un matériau pouvant être lubrifié, est disposé entre le rotor (2) et le carter (1).
